# EUROPÄISCHE PATENTSCHRIFT

(11) **EP 2 714 483 B1**
(45) Veröffentlichungstag und Bekanntmachung des Hinweises auf die Patenterteilung: **23.08.2017**
(21) Anmeldenummer: 12721173.8
(22) Anmeldetag: 08.05.2012
(51) Int. Cl.: B60W 30/09, B60W 30/188, B60W 10/02, B60W 10/184, B60W 10/06, F16D 48/06

(54) **VERFAHREN ZUM BETRIEB EINES SICHERHEITSSYSTEMS ZUR KOLLISIONSVERMEIDUNG UND/ODER KOLLISIONSSCHWEREMINDERUNG IN EINEM KRAFTFAHRZEUG UND KRAFTFAHRZEUG**
METHOD FOR OPERATING A SAFETY SYSTEM FOR AVOIDING COLLISIONS AND/OR FOR REDUCING THE SEVERITY OF COLLISIONS IN A MOTOR VEHICLE, AND MOTOR VEHICLE
PROCÉDÉ DE FONCTIONNEMENT D'UN SYSTÈME DE SÉCURITÉ PERMETTANT D'ÉVITER LES COLLISIONS ET/OU D'EN RÉDUIRE LA GRAVITÉ DANS UN VÉHICULE AUTOMOBILE ET VÉHICULE AUTOMOBILE

(30) Priorität: 25.05.2011 DE 102011102330
(43) Veröffentlichungstag der Anmeldung: 09.04.2014
(73) Patentinhaber: Audi AG, 85045 Ingolstadt (DE)
(72) Erfinder: BREU, Alexander, 93495 Weiding (DE); HOLZMANN, Manfred, 91171 Greding (DE)
(74) Vertreter: Thielmann, Frank
(86) Internationale Anmeldenummer: PCT/EP2012/001967
(87) Internationale Veröffentlichungsnummer: WO 2012/159709

(56) Entgegenhaltungen:
- DE-A1- 10 159 640
- DE-A1-102005 050 043
- DE-A1-102008 003 205
- FR-A1- 2 841 834
- JP-A- 9 112 591

## Beschreibung

Die Erfindung betrifft ein Verfahren zum Betrieb eines Sicherheitssystems zur Kollisionsvermeidung und/oder Kollisionsschwereminderung in einem Kraftfahrzeug, welches ein Kupplungspedal als Stellmittel zum manuellen Betätigen einer Kupplung aufweist, wobei das Sicherheitssystem zur Durchführung wenigstens eines Bremseingriffs bei einer drohenden Kollision ausgebildet ist, sowie ein Kraftfahrzeug.

Längsführende Fahrerassistenzsysteme, die auf die Geschwindigkeit eines Kraftfahrzeugs Einfluss nehmen können, sind im Stand der Technik bereits bekannt. Zu diesen längsführenden Systemen zählen auch Sicherheitssysteme zur Kollisionsvermeidung und/oder Kollisionsschwereminderung, die das Umfeld des Kraftfahrzeugs über geeignete Umfeldsensoren überwachen und hieraus eine Kollisionswahrscheinlichkeit ableiten. In Situationen mit hoher Kollisionswahrscheinlichkeit wird automatisch ohne Fahrerzutun ein Bremseingriff durchgeführt, das bedeutet, das Sicherheitssystem gibt eine Verzögerungsanforderung derart an das Bremssystem aus, dass auf das potentielle Kollisionsobjekt gebremst werden kann. Dabei werden starke, zeitlich begrenzte Bremsverzögerungen eingesetzt, die die Fahrzeuggeschwindigkeit stark reduzieren. Im Idealfall kann das Sicherheitssystem unfallvermeidend agieren, ansonsten jedoch die Kollisionsgeschwindigkeit und damit die Kollisionsschwere reduzieren.

Als besondere Ausgestaltung eines solchen Sicherheitssystems wurden automatische Notbremssysteme für den Stadtverkehr vorgeschlagen, die nur unterhalb einer bestimmten Geschwindigkeitsschwelle, beispielsweise unterhalb von 35 km/h, aktiv sind und Geschwindigkeitsabbauten von beispielsweise 20 km/h erreichen können. Ein Eingriff des Sicherheitssystems kann das Kraftfahrzeug mithin gegebenenfalls bis in den Stillstand verzögern. Dabei kann vorgesehen sein, das Kraftfahrzeug dort für begrenzte, kurze Zeit, beispielsweise 1 - 2 Sekunden, zu halten.

Insbesondere bei handgeschalteten Kraftfahrzeugen, also solchen, bei denen der Fahrer die Kupplung manuell über ein Kupplungspedal als Stellmittel bedienen kann, ergibt sich dabei das Problem, dass der Motor solcher Kraftfahrzeuge mit Handschalter-Getrieben in der Regel abgewürgt wird. Dies liegt darin begründet, dass der Fahrer generell in diesen Situationen als unaufmerksam gilt, nachdem das Sicherheitssystem primär Fehler des Fahrers während der Fahraufgabe korrigiert. Der Fahrer ist nicht in der Lage, in diesen Situationen schnell genug zu reagieren, um die Kupplung zu treten und das Abwürgen des Motors zu verhindern. Vor allem bei Bremseingriffen, die in den Stillstand führen, erfolgt nahezu immer ein Abwürgen des Motors.

Sodann muss der Fahrer nachteilhafterweise grundsätzlich einen manuellen Neustart des Motors einleiten. Dies ist insbesondere dann kritisch, wenn er das Kraftfahrzeug eventuell schnell aus einer Unfallzone wegbewegen möchte oder einem weiteren möglichen Kollisionsobjekt ausweichen möchte, da er nun mehr Zeit benötigt.

Der Abwürgevorgang durch den Bremseingriff stellt sich im Kraftfahrzeug aufgrund weiterer Ursachen unvorteilhaft dar. Dies gilt insbesondere für Kraftfahrzeuge, die mit einem Leerlaufregler des Motors versehen sind. Dieser Leerlaufregler erhöht das Motormoment, um dem Abwürgevorgang entgegenzusteuern. Hieraus folgt, dass der Motor letztlich gegen den Bremseingriff agiert und sich das Bremsmanöver somit je nach Motorvariante und Motorzustand immer anders darstellt. Die Wahrnehmung im Fahrzeugverhalten wird als unkomfortabel empfunden. Es entsteht der Eindruck, dass das Kraftfahrzeug zu "hoppeln" beginnt.

Zudem lässt sich im Allgemeinen eine Beeinträchtigung der Lebensdauer von Fahrzeugkomponenten bei gehäuftem Auftreten derartiger Bremseingriffe, die zum Abwürgen führen, nicht ausschließen.

Endet der Bremseingriff, kurz bevor der Motor abgewürgt wurde, kann es vorkommen, dass aufgrund einer Momentenanhebung durch den Leerlaufregler direkt nach dem Bremseingriff ein für den Fahrer unerwartet höheres Antriebsmoment zur Verfügung steht, durch das der Fahrer überrascht werden kann.

DE 10 2005 050 043 A1 schlägt ein Kraftfahrzeug vor, in dem neben einem Kupplungspedal für ein manuell zu schaltendes Getriebe ein in einem reversibel aktivierbaren Betriebsmodus betätigbares Stellmittel zum automatischen Öffnen und Schließen der Kupplung ohne Pedalbetätigung vorgesehen ist. Das Stellmittel soll in sogenannten Stop-and-go-Situationen genutzt werden, um den Fahrer zu entlasten.

DE 10 2008 003 205 A1 betrifft eine Vorrichtung, ein Verfahren und ein Computerprogramm zur Kollisionsvermeidung oder zur Verminderung der Kollisionsschwere in Folge einer Kollision für Fahrzeuge, insbesondere Nutzfahrzeuge. Dort wird vorgeschlagen, Sensorsysteme zu verwenden, die üblicherweise in Nutzfahrzeugen heute schon zum Betreiben von Assistenz- und Sicherheitssystemen vorhanden sind, und eine Datenfusion vorzunehmen, wobei bei einer autonomen Bremsung die Drehmomentenabgabe des Motors aufzuheben sei, wenn die maximale Bremswirkung entfaltet werden soll. Hierzu wird vorgeschlagen, ein automatisiertes Getriebe zur Öffnung einer Kupplung zu verwenden.

JP 9112591 A betrifft die Kupplungskontrolle in einem automatischen Getriebe, genauer deren Zeitablauf. FR 2 841 834 A1 betrifft die automatische Öffnung einer Kupplung in einem Automatikgetriebe bei einer manuell herbeigeführten Notbremsung. DE 101 59 640 A1 betrifft eine Notkuppeleinrichtung, wobei insgesamt von einer automatisch betätigbaren Anfahrkupplung ausgegangen wird.

Der Erfindung liegt daher die Aufgabe zugrunde, ein Betriebsverfahren für ein Sicherheitssystem anzugeben, mit dem ein sicherer, ein Abwürgen des Motors vermeidender und Motor- und Fahrzeugkomponenten schonender Bremseingriff realisiert werden kann.

Zur Lösung dieser Aufgabe sind bei einem Verfahren der eingangs genannten Art erfindungsgemäß die Merkmale des Anspruchs 1 vorgesehen.

Erfindungsgemäß wird also ein Kraftfahrzeug verwendet, das ein grundsätzlich manuell zu schaltendes Getriebe mit einem Kupplungspedal zur Betätigung der Kupplung umfasst, welches mithin als ein Stellmittel wirkt. Dabei kann insbesondere durch das Kupplungspedal ein rein mechanisches Öffnen und Schließen der Kupplung, beispielsweise über einen Seilzug, realisiert werden. Unabhängig hiervon ist ein weiteres Stellmittel, nämlich der Kupplungsaktuator, vorgesehen, der die Kupplung, ohne dass das Kupplungspedal betätigt werden muss, automatisch öffnen und schließen kann. Der Kupplungsaktuator kann beispielsweise als ein Stellmotor realisiert sein und bevorzugt unmittelbar an der Kupplung, beispielsweise also unmittelbar an einer Kupplungsscheibe, angreifen. Beide Stellmittel greifen dann also letztlich parallel auf die Kupplung zu, so dass sie grundsätzlich unabhängig sind, zumindest in Bezug auf das Öffnen der Kupplung. Denn selbst dann, wenn der Kupplungsaktuator die Kupplung geschlossen hat, kann jederzeit vom Fahrer die Kupplung geöffnet werden. Der Fahrer behält also die grundsätzliche Bedienhoheit über die Kupplung, so dass es sich weiterhin um ein Handschalter-Getriebe handelt, welches jedoch in Bezug auf ein Sicherheitssystem vorteilhafte weitere Möglichkeiten bietet.

So ist erfindungsgemäß vorgesehen, dass im Rahmen wenigstens eines Bremseingriffs des Sicherheitssystems eine Ansteuerung des Kupplungsaktuators zum Öffnen der Kupplung in Abhängigkeit wenigstens einer auf den Bremseingriff bezogenen Eingriffsinformation erfolgt. Dann, wenn ein Abwürgen des Motors droht, wird mithin die Kupplung geöffnet, wobei dies jedoch nicht in simpler Abhängigkeit von einem allgemeinen Parameter wie der Drehzahl oder dergleichen erfolgt, sondern in Abhängigkeit wenigstens einer auf den Bremseingriff bezogenen Eingriffsinformation. Auf diese Weise wird vorteilhaft in dem Sicherheitssystem ohnehin vorliegendes Hintergrundwissen eingesetzt, um eine möglichst vorausschauende Ansteuerung des Kupplungsaktuators zum Öffnen der Kupplung zu ermöglichen. Vorzugsweise kann dabei als Eingriffsinformation eine ein bevorstehendes Abwürgen eines Motors des Kraftfahrzeugs während oder unmittelbar nach Durchführung des Bremseingriffs anzeigende Abwürgeinformation verwendet werden, wobei die Kupplung bei einem bevorstehenden Abwürgen durch den Kupplungsaktuator automatisch geöffnet wird. Nachdem die Umfelddaten und dergleichen sowie die Stärke und Dauer des notwendigen Bremseingriffs ja von vorneherein bekannt sind, ist es demnach möglich, ein Abwürgen des Motors sozusagen zu prädizieren, so dass abgeleitet werden kann, ob der Bremseingriff zu einem Abwürgen des Motors führen wird bzw. bis hin zu einem kritischen Drehzahlbereich erfolgen wird. Basierend hierauf kann die Ansteuerung des Kupplungsaktuators erfolgen. Dies ist insbesondere dahingehend vorteilhaft, dass damit mehrere Effekte abgefangen werden, die - ginge man rein von einer kritischen Drehzahlschwelle oder dergleichen aus - dennoch zu einem Abwürgen des Motors führen könnten.

Zum einen ist hierbei das sogenannte "Nachbremsen" zu nennen. Nach dem Ende des Bremseingriffs kann es also durchaus noch zu einem weiteren Abbremsen des Kraftfahrzeugs kommen, beispielsweise um 3 - 5 km/h. Dies kann dennoch zu einem Abwürgen des Motors führen, obwohl dies der eigentliche Bremseingriff nicht täte. Ferner ist es möglich, dass das Abwürgen bereits erfolgt, bevor die Kupplung tatsächlich durch den Kupplungsaktuator geöffnet ist.

Mithin wird Vorwissen genutzt, um abhängig von dem Wissen über einen bevorstehenden kritischen Drehzahlbereich, der ein Abwürgen bedingen könnte, die Kupplung durch den Kupplungsaktuator bevorzugt etwas früher zu öffnen, als dies eine übliche, unabhängig vom Sicherheitssystem vorliegende Drehzahlbedingung tun würde.

Auf diese Weise werden eine Vielzahl von Vorteilen erreicht. Zum einen wird der Motor auch bei einem Handschalter trotz eines Bremseingriffs nicht mehr abgewürgt. Hieraus ergibt sich, dass der Fahrer im Anschluss unmittelbar weiterfahren kann, wie er es wünscht - gegebenenfalls wiederum unterstützt durch das Sicherheitssystem und den Kupplungsaktuator, worauf im folgenden noch näher eingegangen werden wird. Es ist ein definierter Ablauf des Bremseingriffs gegeben, der mithin unabhängig von den Störgrößen Motor und Motormoment ist. So kann, insbesondere bei frühzeitigem Öffnen der Kupplung, was anhand des Wissens über mögliche Abwürgegefahren, das in der Eingriffsinformation enthalten ist, ja problemlos möglich ist, vermieden werden, dass ein Leerlaufregler oder dergleichen durch Erzeugung eines höheren Motormoments dem Abwürgen und somit aber auch dem Bremseingriff entgegenzuwirken trachtet. Auch im Hinblick hierauf ist das Nutzen von auf den Bremseingriff bezogenen Bremseingriffsinformationen als äußerst vorteilhaft anzusehen.

Durch das Auskuppeln verhält sich das Fahrzeug bezüglich des Antriebsstrangs ferner so, wie es der Fahrer bei einer derartigen Notbremsung erwarten würde. Schließlich gilt, dass Motor- und Fahrzeugkomponenten geschont werden, nachdem frühzeitig schädigenden Effekten wie einem Abwürgen oder auch einem einen Bremseingriff entgegenwirkenden Anheben des Motormoments entgegengewirkt werden kann. Das Sicherheitssystem macht also, während der Fahrer unorientiert ist und seine Fahraufgabe nicht korrekt wahrnimmt, in der Zwischenzeit stellvertretend für den Fahrer alles richtig.

Wird eine Abwürgeinformation als Eingriffsinformation verwendet, kann vorgesehen sein, dass das Öffnen der Kupplung nur bei Vorliegen einer Zusatzbedingung erfolgt, insbesondere einer die Durchführung eines Bremseingriffs anzeigenden Aktivitätsinformation als Eingriffsinformation und/oder bei Unterschreiten eines Schwellwerts für die Drehzahl eines Motors. Letztlich ist es in diesem Zusammenhang möglich, als Abwürgeinformation eine auf einen bestimmten Bremseingriff bezogene Wahr-Falsch-Aussage (Boolesche Variable) zu verwenden. Als Schwellwert für die Drehzahl des Motors sollte hierbei noch nicht eine harte Grenze oder eine tatsächliche kritische Grenzdrehzahl gewählt werden, sondern eine etwas oberhalb einer tatsächlich in Bezug auf ein Abwürgen betrachteten kritischen Grenzdrehzahl liegen, so dass die bereits erwähnte frühzeitige Öffnung der Kupplung aufgrund des Hintergrundwissens ermöglicht wird. Wäre ein hartes Kriterium gegen ein Abwürgen beispielsweise eine Grenzdrehzahl von 900 Umdrehungen pro Minute, so kann als Schwellwert für die Drehzahl in diesem Zusammenhang ein Wert von beispielsweise 1200 Umdrehungen pro Minute angesetzt werden.

In einer konkreten Ausgestaltung kann mithin als Bedingung für den Beginn des Öffnungsvorgangs der Kupplung durch den Kupplungsaktuator vorgesehen sein, dass überprüft wird, ob ein automatischer Bremseingriff aktuell vorliegt und die Motordrehzahl kleiner als der Schwellwert für die Drehzahl (applizierbare Drehzahlschutzschwelle) ist und ob die Abwürgeinformation ein bevorstehendes Abwürgen anzeigt. Liegen all diese Teilbedingungen vor, so erfolgt der Auskupplungsvorgang (Öffnungsvorgang der Kupplung).

Zur Ermittlung der Abwürgeinformation können bevorzugt aufgrund von Umfelddaten des Kraftfahrzeugs und Ego-Daten des Kraftfahrzeugs die Eingriffstärke und/oder Eingriffsdauer des Bremseingriffs prädiziert werden und daraus durch Ermittlung einer Enddrehzahl, auf die abgebremst wird, und Vergleich mit einer kritischen Grenzdrehzahl die Abwürgeinformation abgeleitet werden. Dabei ist die hier erwähnte Grenzdrehzahl kleiner als der im Rahmen der Zusatzbedingung erwähnte Schwellwert für die Drehzahl. Aufgrund der Umfeldwahrnehmung kann das Sicherheitssystem mithin die Eingriffsstärke und die Eingriffsdauer prädizieren und daraus ableiten, ob der Bremsvorgang zu einem Abwürgen des Motors führen wird bzw. bis hin zu einem kritischen Drehzahlbereich, die Grenzdrehzahl unterschreitend, erfolgen wird. Stellt das Sicherheitssystem beispielsweise fest, dass nur ein kurzer Bremseingriff nötig ist und keine Abwürgegefahr für den Motor besteht oder keine kritischen Drehzahlbereiche erreicht werden, so zeigt die Abwürgeinformation an, dass kein Abwürgen des Motors bevorsteht und die Kupplung bleibt geschlossen.

Wie bereits erwähnt, ist es im Rahmen der Erfindung besonders vorteilhaft, wenn der Fahrer auch beim Wiederanfahren nach einem Bremseingriff unterstützt wird, mithin vorteilhafterweise genügend Zeit und Mechanismen zur Verfügung gestellt bekommt, um die Fahrzeugführung wieder wie gewohnt übernehmen zu können. Erfindungsgemäß ist vorgesehen, dass ein automatischer Schließvorgang der Kupplung durch den Kupplungsaktuator nach dem automatischen öffnen der Kupplung mittels des Kupplungsaktuators aufgrund eines Bremseingriffs erfolgt, und zwar unter Berücksichtigung wenigstens einer Bedieninformation. Dabei sei an dieser Stelle angemerkt, dass der Schließvorgang grundsätzlich spätestens dann als beendet gilt, wenn die Kupplung wieder komplett geschlossen ist. Es ist also möglich, den Kupplungsaktuator auch zu nutzen, um nach dem Bremseingriff dem Fahrer weiter zu assistieren oder gar "künstlich" ein Abwürgen des Motors zu erzwingen.

Der Schließvorgang wird bei einem nicht zum Stillstand des Kraftfahrzeugs führenden Bremseingriff unmittelbar nach dem Bremseingriff durchgeführt und bei einem zum Stillstand führenden Bremseingriff nach einer vorbestimmten Stillstandszeit, insbesondere 0,8 - 1,2s, begonnen. Die relativ kurze Zeit, in der das Kraftfahrzeug im Stillstand gehalten wird, bevorzugt 1 s, ist, wie sich aus Studien ergibt, insbesondere dahingehend vorteilhaft, dass der Fahrer durch den überraschenden Bremseingriff wieder auf die Fahrsituation aufmerksam wird und sich der Fahraufgabe widmet, mithin wieder "im Loop" ist. Diese Aufmerksamkeitsphase des Fahrers muss genutzt werden, um ihm möglichst bald die Fahrverantwortung wieder zu übergeben, ihn mithin zur Fahrerübernahme aufzufordern, worauf er durch den Schließvorgang deutlich hingewiesen wird.

Besonders vorteilhaft wird der Schließvorgang in seiner konkreten Ausgestaltung von einer Bedieninformation abhängig gemacht, die letztlich beschreibt, wie der Fahrer reagiert und einen Hinweis auf seine Wünsche gibt. Dabei sind verschiedene Szenarien bezüglich der Bedienung des Kraftfahrzeugs, insbesondere der Pedalerie, zu betrachten, die besonders vorteilhaft alle realisiert werden können.

Erfindungsgemäß ist vorgesehen, dass, falls die Bedieninformation anzeigt, dass der Fahrer weder ein Bremspedal noch ein Gaspedal bedient, über eine erste Einkupplungsdauer die Kupplung automatisch wieder geschlossen wird. Liegt also eine aufgrund eines Bremseingriffs vorgenommene, durch den Kupplungsaktuator bewirkte Auskupplung vor, ist ein Bremseingriff, der nicht in den Stand führt, abgeschlossen oder ist die Stillstandszeit beendet und zeigt ferner die Bedieninformation an, dass der Fahrer weder das Gaspedal noch das Bremspedal betätigt, so führt dies dazu, dass das System über den Kupplungsaktuator ganz langsam, konkret über die erste Einkupplungsdauer, beginnt, wieder einzukuppeln, damit das Kraftfahrzeug anfängt, sich langsam nach vorne wegzubewegen, um den Fahrer darauf hinzuweisen, dass er wieder die Fahrzeugführung übernehmen muss. Selbst wenn der Fahrer nun nicht reagiert, wird der Wiedereinkuppelvorgang (Schließvorgang) fortgesetzt und kann in der Folge zum Abwürgen des Motors führen. Dies wird an dieser Stelle zugelassen, da es letztlich einem eigenen Wunsch des Fahrers - nämlich nicht zu reagieren - entspricht. Dies gilt auch, wenn der Fahrer während dieser Phase das Bremspedal betätigt. Dann erfolgt kein erneuter Abkuppelvorgang, sondern der Schließvorgang wird eingesetzt und kann ebenso zum Abwürgen des Motors führen, nachdem dies der Fahrer über seinen eigenen Bremswunsch veranlasst. Betätigt der Fahrer jedoch das Gaspedal, so kann mit besonderem Vorteil zu der im folgenden beschriebenen Vorgehensweise übergegangen werden.

So kann erfindungsgemäß vorgesehen sein, dass bei einer ein betätigtes Gaspedal anzeigenden Bedieninformation, insbesondere auch während eines bereits laufenden Schließvorgangs, der Schließvorgang als ein Anfahrvorgang durch ein Schließen der Kupplung während einer zweiten Einkupplungsdauer, die insbesondere der ersten Einkupplungsdauer entspricht, realisiert wird. Hierbei wird also nicht nur überprüft, ob der nicht zum Stillstand führende Bremseingriff bzw. die Stillstandszeit abgeschlossen sind und ob ein ausgekuppelter Zustand vorliegt, der im Rahmen eines Bremseingriffs durch den Kupplungsaktuator verursacht wurde, sondern auch, ob möglicherweise ein aktiver Schließvorgang läuft. Zeigt die Bedieninformation ferner an, dass der Fahrer das Gaspedal betätigt, führt dies dazu, dass das Sicherheitssystem über den Kupplungsaktuator beginnt, wieder einzukuppeln. Es wird ein Anfahren mit schleifender Kupplung realisiert, so dass sich das Fahrzeug definiert nach vorne wegbewegt. Die zweite Einkupplungsdauer, die benötigt wird, bis die Kupplung wieder gänzlich geschlossen ist, kann dabei der ersten Einkupplungsdauer entsprechen, wobei selbstverständlich ein bereits abgelaufener Anteil der ersten Einkupplungsdauer bei einem Betätigen des Gaspedals während einem Schließvorgang einen Teil der zweiten Einkupplungsdauer bilden kann.

In diesem Zusammenhang kann mit besonderem Vorteil vorgesehen sein, dass ein durch die Betätigung des Gaspedals angefordertes Wunschantriebsmoment in Abhängigkeit wenigstens eines Einschränkungskriteriums beschränkt und/oder reduziert wird. Es werden also zu hohe Momentenvorgaben über das Gaspedal durch eine Momentenreduktion oder eine Momenteneinschränkung abgeschwächt, damit keine zu hohen Kupplungsschleifmomente wirken. Auf diese Weise wird ein definiertes Anfahren hergestellt, das zum einen ein zügiges Anfahren sicherstellt, aber gleichzeitig auch kein zu dynamisches, um den Fahrer nicht zu erschrecken, falls er sich seiner aktuellen Stellung auf dem Gaspedal nicht bewusst ist, beispielsweise dann, wenn der von dem Bremseingriff überraschte Fahrer auf das Gaspedal gedrückt wird oder dergleichen. Dabei kann insbesondere vorgesehen sein, dass eine zeitabhängige Kurve ein zulässiges Maximalantriebsmoment über die zweite Einkupplungsdauer beschreibt, wobei mit zunehmender Zeit des Schließvorgangs ein höheres Antriebsmoment verfügbar wird. Beispielsweise kann die Kurve wenigstens eine Rampe umfassen, insbesondere zwei Rampen, über die langsam eine schnellere Beschleunigung zugelassen wird. Diese Rampen können auch als zwei Schilder angesehen werden. Es kann hier beispielsweise etwa 4 - 6s, bevorzugt 5s, dauern, bis wieder das eigentlich durch die Gaspedalstellung angezeigte Wunschantriebsmoment realisiert wird. Eine anfängliche Beschränkung kann beispielsweise so gewählt werden, dass sie etwa 50 - 60 Newtonmeter über den Leerlaufmoment liegt; dies ist jedoch letztlich von dem konkreten Kraftfahrzeug und dem eigentlichen Leerlaufmoment abhängig.

Allgemein sei angemerkt, dass eine Vielzahl von Kraftfahrzeugen bereits geeignete Sensoren besitzen, um die Stellung der verschiedenen Pedale zu überprüfen. Die Messung von Pedalstellungen und Pedalbetätigungen ist im Stand der Technik weitgehend bekannt und soll hier nicht genauer dargelegt werden. Derartige Informationen lassen sich jedoch insbesondere im Zusammenhang des Anfahrvorgangs vorteilhaft nutzen, um die Bedieninformation im Hinblick auf den Fahrerwunsch weiter zu präzisieren.

So kann vorgesehen sein, dass ein die Betätigungsart des Gaspedals beschreibendes Betätigungssignal ermittelt wird, wobei bei einem ein übersteuerndes Verhalten des Fahrers anzeigenden Betätigungssignal der Schließvorgang in einer dritten Einkupplungsdauer, die kürzer als die zweite Einkupplungsdauer ist, abgeschlossen wird und die Beschränkung und/oder Reduzierung des Wunschantriebsmoments entsprechend der dritten Einkupplungsdauer schneller aufgehoben wird. Unter ein übersteuerndes Verhalten des Fahrers fallen beispielsweise ein sogenanntes "Pumpen" am Gaspedal sowie ein beispielsweise schnelles, vollständiges Durchtreten des Gaspedals, welche beide darauf hin deuten, dass der Fahrer sein Kraftfahrzeug besonders schnell von der aktuellen Position wegbewegen möchte, beispielsweise, weil ein anderes mögliches Kollisionsobjekt naht oder dergleichen. Ein derartiges übersteuerndes Verhalten kann über einen Pedalnullgang und/oder Amplitudenwerte in Verbindung mit Gaspedalgradienten ermittelt werden, es werden also letztlich Daten eines die Betätigung des Gaspedals messenden Sensors anhand verschiedener Kriterien ausgewertet, um die Betätigungsinformation zu ermitteln. Wird also ein derartiges übersteuerndes Verhalten festgestellt, so wird der Anfahrvorgang beschleunigt, indem der Kupplungsaktuator schneller die Kupplung schließt und die Begrenzung über die Momentenreduktion schneller, beispielsweise in Stufen, wegfällt. Es liegt also eine Beschleunigung des Gesamtvorgangs vor, die es ermöglicht, das Kraftfahrzeug dennoch schnell von seiner aktuellen Position zu entfernen.

In weiterer Ausgestaltung der vorliegenden Erfindung kann vorgesehen sein, dass bei einer ein betätigtes Bremspedal anzeigenden Bedieninformation, insbesondere auch während eines bereits laufenden Schließvorgangs, die Kupplung ab dem Beginn der Bremspedalbetätigung oder bei nach Beendigung des Bremseingriffs, oder, falls eine Stillstandszeit vorliegt, nach Ablauf der Stillstandszeit bereits betätigtem Bremspedal mit Beendigung des Bremseingriffs oder Ablauf der Stillstandszeit für eine Wartezeitdauer, insbesondere 1 bis 3 Sekunden, die Kupplung geöffnet gehalten wird, bevor sie mit einer vierten Einkupplungsdauer, die insbesondere der ersten Einkupplungsdauer entspricht, geschlossen wird. Bei einer Betätigung des Bremspedals kann also vorgesehen sein, dass der ausgekuppelte Zustand über den Kupplungsaktuator noch für eine vorbestimmte Zeitdauer, die Wartezeitdauer, welche beispielsweise zwei Sekunden betragen kann, aufrecht erhalten wird. Erst danach beginnt ein langsamer Schließvorgang, der in der Folge zu einem Abwürgen des Motors führen kann, falls der Fahrer nicht entsprechend übernimmt. Es sei angemerkt, dass dann, wenn der Fahrer während dieses Vorgangs das Gaspedal betätigt, die im Vorangehenden beschriebene Vorgehensweise bezüglich eines Anfahrvorgangs gewählt werden kann. Durch die Wartezeitdauer wird dem Fahrer mithin eine Möglichkeit gegeben sich zunächst zu orientieren.

Der Einfluss des Sicherheitssystems auch während eines laufenden Schließvorgangs stellt sicher, dass das Konzept, alles stellvertretend für den Fahrer richtig zu machen, solange dieser unorientiert ist und seine Fahraufgabe nicht korrekt wahrnimmt, vorteilhafterweise erweitert werden kann, bis der Fahrer die Fahrzeugführung wieder übernommen hat oder ein Abwürgen des Motors erfolgt ist. Der Fahrer erhält, wie eingangs bereits erwähnt, mithin genügend Zeit und Mechanismen zur Verfügung gestellt, um die Fahrzeugführung wieder wie gewohnt übernehmen zu können.

Äußerst zweckmäßig ist es, wenn ein laufender Öffnungsvorgang und/oder Schließvorgang der Kupplung bei einem eine Betätigung des Kupplungspedals anzeigenden Signal abgebrochen wird. Das bedeutet, jeglicher Öffnungsvorgang oder Schließvorgang durch den Kupplungsaktuator wird im Rahmen des Betriebs des Sicherheitssystems grundsätzlich beendet, sobald der Fahrer selbst über das Kupplungspedal die Kupplung betätigt. Hiermit zeigt der Fahrer bereits grundsätzlich seine Fahrübernahmebereitschaft an. Auch dann, wenn eine durch den Kupplungsaktuator geöffnete Kupplung vorliegt und ein eine Betätigung des Kupplungspedals vorliegt, kann ein vorzugsweise sehr schnelles Schließen der Kupplung durch die Kupplungsaktuator durchgeführt werden, das bedeutet, die Kupplung wird durch den Kupplungsaktuator nicht länger offen gehalten, ggf. aber durch das Kupplungspedal.

Vorzugsweise wird bei einem Öffnungsvorgang und/oder einer automatisch durch den Kupplungsaktuator geöffneten Kupplung und/oder einem Schließvorgang über ein akustisches oder optisches Ausgabemittel eine Fahrerübernahmeaufforderung ausgegeben. Das bedeutet, während der kompletten Dauer des Öffnungsvorgangs, des Schließvorgangs oder wenn eine durch den Kupplungsaktuator im Rahmen eines Bremseingriffs geöffnete Kupplung vorliegt, wird der Fahrer durch optische und akustische Maßnahmen, beispielsweise über ein Kombinationsinstrument, informiert und zur Fahrübernahme aufgefordert. Hierbei können beispielsweise der zusätzlichen Funktionalität des vorliegenden Verfahrens zugeordnete spezielle akustische oder optische Ausgabemittel vorgesehen sein, beispielsweise Symbole, die eine automatisch geöffnete Kupplung, einen Schließvorgang und dergleichen anzeigen. Hierdurch wird eine optimale Information des Fahrers sichergestellt.

Es ist ferner zweckmäßig, wenn bei einem Fehlerzustand des Kraftfahrzeugs eine durch den Kupplungsaktuator geöffnete Kupplung automatisch geschlossen wird. Es wird mithin ein Failsafe-Zustand definiert, der bei durch den Kupplungsaktuator geöffneter Kupplung bei hier nicht dargestellten Systemzuständen oder Fehlerzuständen die Kupplung wieder schließt. Mithin wird bei Fehlerzuständen oder sonstigen undefinierten Systemzuständen immer ein zügiger Schließvorgang eingeleitet. Dies ist beispielsweise nützlich, wenn das Kraftfahrzeug liegenbleibt oder dergleichen, denn wäre dann die Kupplung durch den Kupplungsaktuator immer offen gehalten, wäre das Kraftfahrzeug nicht mehr bewegbar. Mithin sollte im Zweifel immer eine geschlossene Kupplung vorliegen, die dann durch das Kupplungspedal wie üblich geöffnet und geschlossen werden kann.

Neben dem Verfahren betrifft die vorliegende Erfindung noch ein Kraftfahrzeug, umfassend ein Kupplungspedal als Stellmittel zum manuellen Betätigen einer Kupplung, einen als zusätzliches Stellmittel für die Kupplung vorgesehenen Kupplungsaktuator zum automatischen Öffnen und Schließen der Kupplung und ein Sicherheitssystem zur Kollisionsvermeidung und/oder Kollisionsschwereminderung mit einem zur Durchführung eines Verfahrens nach einem der vorangehenden Ansprüche ausgebildeten Steuergerät. Das Steuergerät des Sicherheitssystems ist mithin dazu ausgebildet, im Zusammenhang mit einem Bremseingriff des Sicherheitssystems eine Ansteuerung des Kupplungsaktuators zum Öffnen der Kupplung in Abhängigkeit wenigstens einer auf den Bremseingriff bezogenen Eingriffsinformation selbst vorzunehmen oder auszulösen. Sämtliche Ausführungen bezüglich des erfindungsgemäßen Verfahrens lassen sich analog auf das erfindungsgemäße Kraftfahrzeug übertragen, so dass auch mit diesem die dargestellten Vorteile erreicht werden können.

Weitere Vorteile und Einzelheiten der vorliegenden Erfindung ergeben sich aus den im Folgenden beschriebenen Ausführungsbeispielen sowie anhand der Zeichnungen. Dabei zeigen:
- Fig. 1: ein erfindungsgemäßes Kraftfahrzeug,
- Fig. 2: eine Prinzipskizze der für das erfindungsgemäße Verfahren relevanten Elemente des Kraftfahrzeugs aus Fig. 1,
- Fig. 3: einen Ablaufplan des erfindungsgemäßen Verfahrens, und
- Fig. 4: eine mögliche Kurve zur Einschränkung des Wunschantriebsmoments.

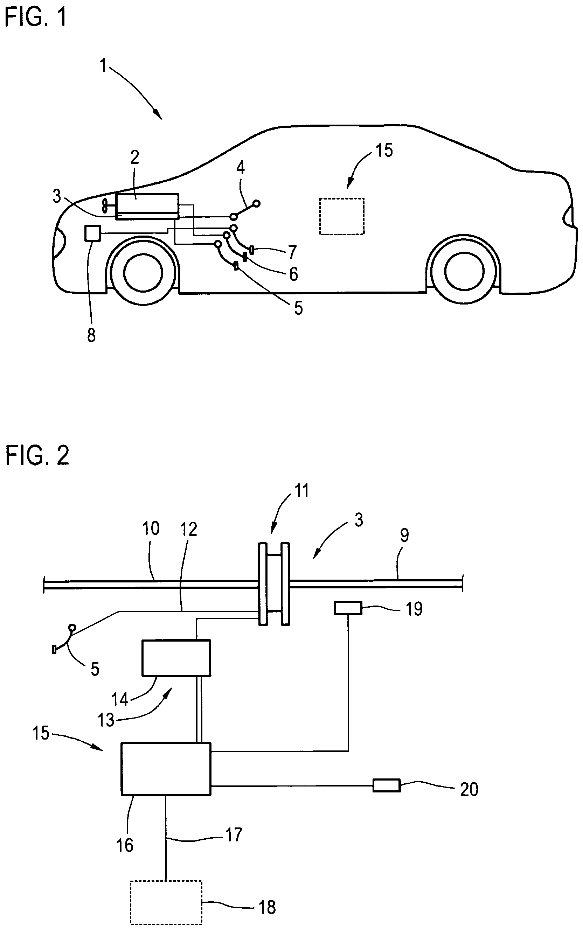

Fig. 1 zeigt eine Prinzipskizze eines erfindungsgemäßen Kraftfahrzeugs 1, welches einen Motor 2 nebst einem Getriebe 3 umfasst, welches über einen Schalthebel 4 vom Fahrer manuell zu schalten ist, wozu das Getriebe entkuppelt werden muss. Hierfür dient, wie grundsätzlich bekannt, ein Kupplungspedal 5, das vom Fahrer zum Öffnen oder Schließen der Kupplung aktiv zu bewegen ist.

Ferner ist ein Gaspedal 6 vorgesehen, welches die Treibstoffzufuhr regelt und mithin ein Wunschantriebsmoment an den Motor 2 vermittelt. Schließlich ist auch ein Bremspedal 7 vorgesehen, welches auf bekannte Weise die Bremsen eines Bremssystems 8 ansteuert.

Fig. 2 zeigt in Form einer Prinzipdarstellung nun wesentliche Komponenten des Kraftfahrzeugs 1. Gezeigt ist das Getriebe 3, das eine Getriebeeingangswelle 9 und eine Kurbelwelle 10 aufweist, die über eine Kupplung 11 miteinander reversibel kuppelbar und entkuppelbar sind. Hierzu dient, wie bereits beschrieben, zum einen das Kupplungspedal 5, das vom Fahrer aktiv zu betätigen ist. Wird es getreten, so wird die Kupplung 11 bekanntlich geöffnet, wird es wiederum entlastet, so schließt die Kupplung 11. Das Kupplungspedal 5 bildet also ein Stellmittel, welches im vorliegenden Ausführungsbeispiel rein mechanisch auf die Kupplung 11 wirkt, insbesondere über einen in Fig. 2 lediglich angedeuteten Seilzug 12, der unmittelbar an der Kupplung angreift.

Weiterhin ist nun ein zusätzliches Stellmittel 13, nämlich ein Kupplungsaktuator 14, vorgesehen, der als Stellmotor ausgeführt sein kann und bevorzugt direkt im Getriebe 3 angeordnet ist. Somit kann der Kupplungsaktuator 14 ebenfalls - parallel zu dem Seilzug 12 - unmittelbar auf die Kupplung wirken. Selbstverständlich sind jedoch auch andere Ausgestaltungen der Stellmittel denkbar.

Das Kraftfahrzeug 1 umfasst nun ferner ein in Fig. 1 nur angedeutetes Sicherheitssystems 15 zur Kollisionsvermeidung und/oder Kollisionsschwereminderung, welches ein Steuergerät 16 umfasst, über das auch der Kupplungsaktuator 14 ansteuerbar ist. Das Steuergerät 16 ist zur Durchführung des erfindungsgemäßen Verfahrens ausgebildet, mithin zur Ansteuerung des Kupplungsaktuators 14 zum Öffnen der Kupplung 11 in Abhängigkeit wenigstens einer auf einen Bremseingriff bezogenen Eingriffsinformation im Rahmen des Bremseingriffs ausgebildet. Das Sicherheitssystem 15 ist über einen hier nur ansatzweise dargestellten Fahrzeugbus 17 mit weiteren Fahrzeugsystemen 18 verbunden, von denen verschiedene Informationen erhalten werden können, insbesondere Umfelddaten, oder an die Anforderungen ausgegeben werden können, beispielsweise im Rahmen eines Bremseingriffs eine Bremsverzögerungsanforderung an das Bremssystem 8 als weiteres Fahrzeugsystem 18.

Über einen Drehzahlsensor 19, der im dargestellten Beispiel die Drehzahl der Getriebeeingangswelle 6 abgreift, wird eine Drehzahlinformation an das Steuergerät 16 gegeben. Ferner ist das Steuergerät 16 auch mit Anzeigemitteln 20 verbunden, die optische und akustische Anzeigemittel umfassen, mit denen dem Fahrer verschiedene Informationen über den Betrieb des Sicherheitssystems 15 und insbesondere auch eine Fahrübernahmeinformation ausgegeben werden kann. Dabei kann es sich auch um von noch weiteren Fahrzeugsystemen genutzte Anzeigemittel handeln.

Bei dem Sicherheitssystem 15 handelt es sich im vorliegenden Fall um ein automatisches Notbremssystem für den Stadtbetrieb. Dieses empfängt über den Fahrzeugbus 17 Umfelddaten, aus denen eine Kollisionswahrscheinlichkeit für verschiedene Objekte ermittelt werden kann. Abhängig von gewissen Schwellwerten für die Kollisionswahrscheinlichkeit können Warnungen ausgegeben werden, es ist jedoch auch möglich, dass ein Bremseingriff durchgeführt wird, um das eigene Kraftfahrzeug 1 vor der Kollision abzubremsen und/oder durch eine Senkung der Kollisionsgeschwindigkeit die Kollisionsschwere zu mindern. Nachdem es sich vorliegend um ein automatisches Notbremssystem für die Stadt handelt, ist es nur unterhalb einer bestimmten Grenzgeschwindigkeit, hier 35 km/h, aktiv. Die Geschwindigkeit wird von entsprechenden anderen Fahrzeugsystemen 18 zur Verfügung gestellt.

Die allgemeine Funktionalität solcher Sicherheitssysteme ist im Stand der Technik bereits bekannt und soll daher nicht im Detail dargelegt werden. Wie bereits erwähnt, ist das Steuergerät 16 ausgebildet, das erfindungsgemäße Verfahren auszuführen. Dieses dient dem Zweck, dem Sicherheitssystem 15 bereits bekannte Informationen über den Bremseingriff zu nutzen, um durch frühzeitigen Eingriff ein Abwürgen des Motors oder sonstige negative Einflüsse auf die verschiedenen Systeme des Kraftfahrzeugs zu vermeiden.

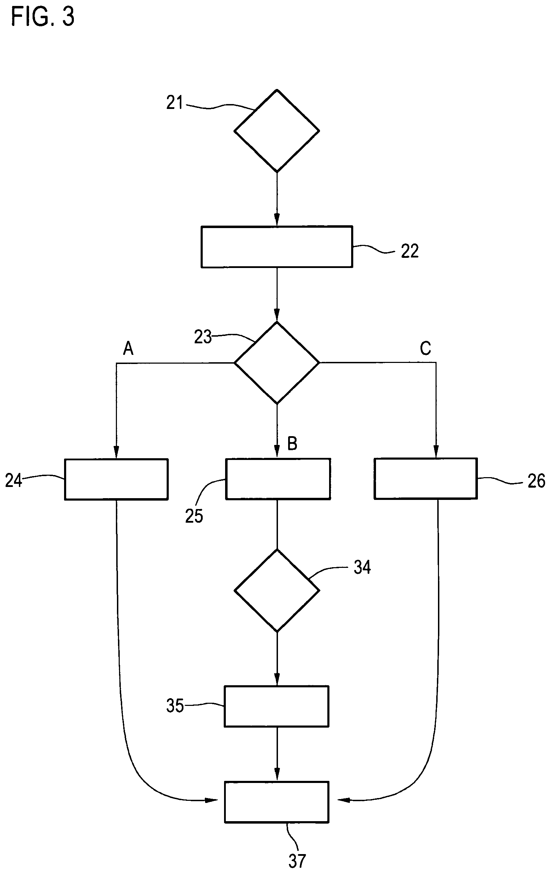

Hierzu zeigt Fig. 3 einen prinzipiellen Ablaufplan des erfindungsgemäßen Verfahrens, welches während und unmittelbar nach einem Bremseingriff durchgeführt wird.

In einem Schritt 21 wird laufend überprüft, ob die Bedingungen für einen Öffnungsvorgang der Kupplung 11 mittels des Kupplungsaktuators 14 vorliegen. Dabei wird, wie bereits erwähnt, auch die Eingriffsinformation berücksichtigt. Bei der Eingriffsinformation handelt es sich vorliegend um eine ein bevorstehendes Abwürgen des Motors 2 des Kraftfahrzeugs 1 während oder unmittelbar nach Durchführung des Bremseingriffes anzeigende Abwürgeinformation, zu deren Ermittlung Daten des Sicherheitssystems 15 selbst eingesetzt werden. So wird aufgrund der Umfeldwahrnehmung, letztlich also der Umfelddaten, durch das Steuergerät 16 prädiziert, wie die Eingriffsstärke und die Eingriffsdauer ausfallen. Hieraus kann abgeleitet werden, ob der Bremsvorgang zu einem Abwürgen des Motors führen wird bzw. bis hin zu einem kritischen Drehzahlbereich erfolgen wird. Konkret kann beispielsweise untersucht werden, ob eine sich nach Abschluss des Bremseingriffs einstellende Enddrehzahl eine kritische Grenzdrehzahl unterschreitet, wobei bei einer solchen Unterschreitung ein bevorstehendes Abwürgen erkannt wird. Eine entsprechende Variable - die Abwürgeinformation - wird auf den Wert "wahr" gesetzt. Ist jedoch beispielsweise nur ein kurzer Bremseingriff nötig, bei dem keine Abwürgegefahr für den Motor besteht und keine kritischen Drehzahlbereiche erreicht werden, so wird die Variable auf "falsch" gesetzt.

Zusätzlich zu der Bedingung eines prädizierten Abwürgens des Motors 2 werden noch Zusatzbedingungen betrachtet, die ebenso beide vorliegen müssen, nämlich zum einen eine die Durchführung eines Bremseingriffs anzeigende Aktivitätsinformation und die Unterschreitung eines Schwellwerts für die Drehzahl des Motors 2. Dabei wird hier eine applizierbare Drehzahlschutzschwelle gewählt, die oberhalb der kritischen Grenzdrehzahl liegt, um möglichst frühzeitig eine Öffnung der Kupplung erreichen zu können und den Bremseingriff auch dann definiert ablaufen zu lassen, wenn ein Leerlaufregler vorhanden ist, der durch eine Momentenanhebung beispielsweise dem Bremsvorgang entgegenwirken könnte.

Wurde also ein Abwürgen des Motors 2 prädiziert und liegen die beiden Zusatzbedingungen ebenso vor, so wird in einem Schritt 22 in einem Öffnungsvorgang die Kupplung 11 durch den Kupplungsaktuator 14, der entsprechend vom Steuergerät 16 angesteuert wird, geöffnet.

Das erfindungsgemäße Verfahren unterstützt jedoch auch den Wiederanfahrvorgang nach einem Bremseingriff, indem abhängig von bestimmten Bedingungen ein Schließvorgang der Kupplung 11 durch den Kupplungsaktuator 14 durchgeführt wird, der spätestens dann als beendet gilt, wenn die Kupplung 11 wieder komplett geschlossen ist. Dabei kann dieser Schließvorgang bei einem nicht zum Stillstand des Kraftfahrzeugs 1 führenden Bremseingriff unmittelbar nach dem Bremseingriff erfolgen und bei einem zum Stillstand des Kraftfahrzeugs 1 führenden Bremseingriff nach einer vorbestimmten Stillstandszeit, hier eine Sekunde, beginnen. Damit ist bereits eine Grundbedingung definiert, die zum Durchführen des Schließvorgangs vorliegen muss. Bei der konkreten Durchführung des Schließvorgangs werden jedoch noch weitere, von einer Bedieninformation abhängige Kriterien berücksichtigt. Mithin wird in einem Schritt 23 überprüft, welche Bedingungen vorliegen und wie das Schließen der Kupplung 11 konkret stattfinden soll.

Dabei sei an dieser Stelle bereits angemerkt, dass im Rahmen des erfindungsgemäßen Verfahrens immer dann, wenn ein Öffnungsvorgang oder ein Schließvorgang vorliegen oder die Kupplung 11 in einem durch den Kupplungsaktuator 14 geöffneten Zustand ist, überwacht wird, ob der Fahrer das Kupplungspedal 5 betätigt. Wird dieses betätigt, so wird ein Öffnungsvorgang bzw. ein Schließvorgang unmittelbar abgebrochen und der Kupplungsaktuator wird in eine einer gänzlich geschlossenen Kupplung entsprechende Position verbracht. Das bedeutet, dass eine Betätigung des Kupplungspedals 5 jederzeit so verstanden wird, dass der Fahrer die Führung des Kraftfahrzeugs wieder vollständig übernehmen möchte, so dass das Kupplungspedal 5 stets Priorität über den Kupplungsaktuator 14 hat.

Auch die übrigen Bedieninformationen betreffen vorliegend die Pedalbetätigung. Sie können von entsprechenden Sensoren bzw. Messmitteln geliefert werden, wie sie allgemein bekannt sind.

Eine erste möglicherweise vorliegende Gesamtbedingung A für einen Schließvorgang umfasst neben der Grundbedingung noch die Abfrage, ob eine durch den Kupplungsaktuator 14 automatisch geöffnete Kupplung 11 vorliegt sowie in Auswertung der Bedieninformation die Bedingung, dass weder das Gaspedal 6 noch das Bremspedal 7 betätigt werden. Liegt diese Gesamtbedingung A vor, so kuppelt in einem Schritt 24 das Sicherheitssystem 15 über den Kupplungsaktuator 14 ganz langsam über eine erste Einkupplungszeitdauer wieder ein, damit das Kraftfahrzeug 1 beginnt, sich langsam nach vorne wegzubewegen, um den Fahrer darauf hinzuweisen, dass er wieder die Fahrzeugführung übernehmen muss. Keine Änderung erfolgt, wenn der Fahrer während dieses Schließvorgangs in Schritt 24 das Bremspedal 7 drückt, auch wenn dies zum Abwürgen des Motors 2 führt, nachdem dies von dem Fahrer über seinen eigenen Bremswunsch veranlasst wird.

Es sei an dieser Stelle noch angemerkt, dass auch während des Schließvorgangs ständig weiter gemäß Schritt 23 überprüft wird, ob gegebenenfalls eine Bedingung vorliegt, um zwischen den unterschiedlichen Verfahrensweisen in den Schritten 24, 25 und 26 zu wechseln, so dass beispielsweise dann, wenn der Fahrer während des Schließvorgangs gemäß Schritt 24 auf das Gaspedal 6 tritt, die im folgenden noch zu erläuternde Bedingung B erfüllt wird und mithin mit Schritt 25 fortgesetzt wird.

Die Gesamtbedingung B umfasst neben der Grundbedingung zunächst noch die Abfrage, ob eine durch automatisches Öffnen mittels des Kupplungsaktuators 14 geöffnete Kupplung 11 vorliegt oder ob gerade ein Schließvorgang aktiv ist. Ferner muss die Bedieninformation anzeigen, dass der Fahrer das Gaspedal 6 betätigt.

Dann wird der Schließvorgang gemäß Schritt 26 durchgeführt. Hierbei beginnt ebenso das Sicherheitssystem 15 über den Kupplungsaktuator 14 wieder einzukuppeln. Wird mithin ein Anfahren mit schleifender Kupplung 11 realisiert, wobei jedoch zu hohe Momentenvorgaben über das Gaspedal 6 durch eine Momenteneinschränkung abgeschwächt werden. Der Schließvorgang erfolgt über eine zweite Einkupplungsdauer, die der ersten Einkupplungsdauer entsprechen kann.

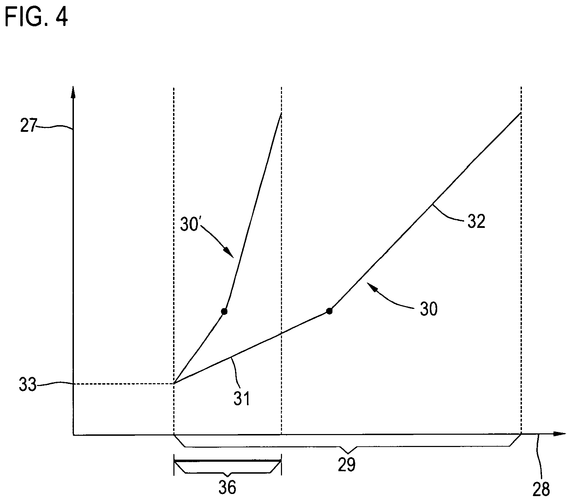

Die Momenteneinschränkung wird dabei derart durchgeführt, dass lediglich ein langsam steigendes Maximalantriebsmoment gegeben sein darf, welches durch eine Kurve beschrieben wird, wie sie beispielsweise in Fig. 4 dargestellt wird. Darin ist auf einer Achse 27 das Maximalantriebsmoment gegen die Zeit auf eine Achse 28 aufgetragen, auf der die zweite Einkupplungsdauer 29 markiert ist. Vorliegend umfasst die Kurve 30 zwei Rampen 31, 32 unterschiedlicher Steigungen, die das Wunschantriebsmoment nach oben begrenzen. Die Kurve beginnt dabei im vorliegenden Fall bei einem Startantriebsmoment 33, das ungefähr 50 bis 60 Nm oberhalb dem Leerlaufmoment liegt. Dieses wird dann ersichtlich langsam gesteigert.

Nachdem aber auch Situationen auftreten können, in denen ein Fahrer das Kraftfahrzeug 1 nach einem Bremseingriff schneller an einen anderen Ort verbringen muss, wird kontinuierlich in einem Schritt 34 ein die Betätigungsart des Gaspedals 6 beschreibendes Betätigungssignal ermittelt und überprüft, ob dieses ein übersteuerndes Verhalten des Fahrers anzeigt. Das kann beispielsweise bedeuten, dass der Fahrer durch eine Art "Pumpen", also wiederholtes Treten und Loslassen des Gaspedals 6, oder durch ein schnelles vollständiges Durchtreten des Gaspedals 6 anzeigt, dass er das Kraftfahrzeug schnell wegbewegen möchte. Grund hierfür kann beispielsweise die Annäherung eines weiteren Kollisionsobjekts sein. Liegt also ein derartiges übersteuerndes Verhalten vor, so wird das Verhalten während des Schließvorgangs in einem Schritt 35 derart modifiziert, dass der Gesamtvorgang beschleunigt ist. Das bedeutet, es wird bereits während einer kürzeren, ebenso in Fig. 4 dargestellten Einkupplungsdauer 36 eingekuppelt, wodurch sich auch ein entsprechend beschleunigtes Wegfallen der Momenteneinschränkung ergibt, wie durch die Kurve 30' dargestellt wird. Die Begrenzung des Antriebsmoments kann allerdings auch in Stufen wegfallen.

Schließlich existiert noch eine Gesamtbedingung C, bei der neben der Grundbedingung auch überprüft wird, ob tatsächlich eine durch den Kupplungsaktuator 14 geöffnete Kupplung 11 vorliegt bzw. gerade ein Schließvorgang vorliegt, und weiterhin, ob die Bedieninformation anzeigt, dass der Fahrer gerade das Bremspedal 7 betätigt. Dies führt im Schritt 26 dazu, dass mit der Bremspedalbetätigung zunächst für eine Wartezeitdauer von im vorliegenden Beispiel zwei Sekunden die Kupplung 11 geöffnet gehalten wird, bevor sie mit einer vierten Einkupplungsdauer, die hier der ersten Einkupplungsdauer entspricht, geschlossen wird. Wird während dieses Schließvorgangs dann doch das Gaspedal 6 betätigt, so ist die Gesamtbedingung B erfüllt und es kann zu Schritt 25 gewechselt werden.

In jedem Fall wird der Schließvorgang beendet bzw. die Kupplung mittels des Kupplungsaktuators 14 gänzlich geschlossen, wenn das Kupplungspedal 5 betätigt wird oder die Kupplung 11 wieder gänzlich geschlossen ist, Schritt 37.

Während der gesamten Dauer des Öffnungsvorgangs, des Schließvorgangs und auch der durch den Kupplungsaktuator 14 geöffneten Kupplung wird der Fahrer über die optischen und akustischen Anzeigemittel 20 informiert und zur Fahrübernahme aufgefordert. Dabei können beispielsweise Symbole vorgesehen sein, die hinterleuchtet werden und den Fahrer über die automatische Auskupplung informieren, beispielsweise ein Symbol, das hinterleuchtet wird, sobald eine automatische Auskupplung über den Kupplungsaktuator 14 vorliegt, und welches zum Blinken beginnt, sobald der Schließvorgang beginnt. Selbstverständlich sind jedoch auch andere Möglichkeiten denkbar, den Fahrer zu informieren.

Schließlich sei noch angemerkt, dass immer dann, wenn die Kupplung 11 durch den Kupplungsaktuator 14 geöffnet gehalten wird und ein Fehlerzustand oder ein undefinierter Systemzustand festgestellt wird, ein zügiger Schließvorgang eingeleitet wird, nachdem eine durch den Kupplungsaktuator 14 offengehaltene Kupplung 11 ein Wiederanfahren ansonsten ja vermeiden würde. Mithin wird hiermit ein Failsafe-Zustand eingenommen.

## Patentansprüche

1. Verfahren zum Betrieb eines Sicherheitssystems (15) zur Kollisionsvermeidung und/oder Kollisionsschwereminderung in einem Kraftfahrzeug (1), welches ein Kupplungspedal (5) als Stellmittel zum manuellen Betätigen einer Kupplung (11) aufweist, wobei das Sicherheitssystem (15) zur Durchführung wenigstens eines Bremseingriffs bei einer drohenden Kollision ausgebildet ist,
**dadurch gekennzeichnet,**
**dass** ein als zusätzliches Stellmittel (13) vorgesehener Kupplungsaktuator (14) zum automatischen Öffnen und Schließen der Kupplung (11) verwendet wird, wobei im Rahmen wenigstens eines Bremseingriffs des Sicherheitssystems (15) eine Ansteuerung des Kupplungsaktuators (14) zum Öffnen der Kupplung (11) in Abhängigkeit wenigstens einer auf den Bremseingriff bezogenen Eingriffsinformation erfolgt, wobei unter Berücksichtigung wenigstens einer Bedieninformation ein automatischer Schließvorgang der Kupplung (11) durch den Kupplungsaktuator (14) nach dem automatischen Öffnen der Kupplung (11) mittels des Kupplungsaktuators (14) aufgrund eines Bremseingriffs erfolgt, wobei der Schließvorgang bei einem nicht zum Stillstand des Kraftfahrzeugs (1) führenden Bremseingriff unmittelbar nach dem Bremseingriff erfolgt und bei einem zum Stillstand führenden Bremseingriff nach einer vorbestimmten Stillstandszeit beginnt, wobei, falls die Bedieninformation anzeigt, dass der Fahrer weder ein Bremspedal (7) noch ein Gaspedal (6) bedient, über eine erste Einkupplungsdauer die Kupplung (11) automatisch wieder geschlossen wird.

2. Verfahren nach Anspruch 1,
**dadurch gekennzeichnet,**
**dass** als Eingriffsinformation eine ein bevorstehendes Abwürgen eines Motors (2) des Kraftfahrzeugs (1) während oder unmittelbar nach Durchführung des Bremseingriffes anzeigende Abwürgeinformation verwendet wird, wobei die Kupplung (11) bei einem bevorstehenden Abwürgen durch den Kupplungsaktuator (14) automatisch geöffnet wird.

3. Verfahren nach Anspruch 2,
**dadurch gekennzeichnet,**
**dass** das Öffnen der Kupplung (11) nur bei Vorliegen einer Zusatzbedingung erfolgt, insbesondere einer die Durchführung eines Bremseingriffs anzeigenden Aktivitätsinformation als Eingriffsinformation und/oder bei Unterschreiten eines Schwellwerts für die Drehzahl des Motors (2).

4. Verfahren nach Anspruch 2 oder 3,
**dadurch gekennzeichnet,**
**dass** zur Ermittlung der Abwürgeinformation aufgrund von Umfelddaten des Kraftfahrzeugs (1) und Egodaten des Kraftfahrzeugs (1) die Eingriffsstärke und/oder Eingriffsdauer des Bremseingriffs prädiziert und daraus durch Ermittlung einer Enddrehzahl, auf die abgebremst wird, und Vergleich mit einer kritischen Grenzdrehzahl die Abwürgeinformation abgeleitet wird.

5. Verfahren nach einem der vorangehenden Ansprüche,
**dadurch gekennzeichnet,**
**dass** als vorbestimmte Stillstandszeit 0,8 bis 1,2s verwendet werden.

6. Verfahren nach einem der vorangehenden Ansprüche,
**dadurch gekennzeichnet,**
**dass** bei einer ein betätigtes Gaspedal (6) anzeigenden Bedieninformation, insbesondere auch während eines bereits laufenden Schließvorgangs, der Schließvorgang als ein Anfahrvorgang durch ein Schließen der Kupplung (11) während einer zweiten Einkupplungsdauer, die insbesondere der ersten Einkupplungsdauer entspricht, realisiert wird.

7. Verfahren nach Anspruch 6,
wobei ein durch die Betätigung des Gaspedals (6) angefordertes Wunschantriebsmoment in Abhängigkeit wenigstens eines Einschränkungskriteriums beschränkt und/oder reduziert wird.

8. Verfahren nach Anspruch 7,
**dadurch gekennzeichnet,**
**dass** ein die Betätigungsart des Gaspedals (6) beschreibendes Betätigungssignal ermittelt wird, wobei bei einem ein übersteuerndes Verhalten des Fahrers anzeigenden Betätigungssignal der Schließvorgang in einer dritten Einkupplungsdauer, die kürzer als die zweite Einkupplungsdauer ist, abgeschlossen wird und die Beschränkung und/oder Reduzierung des Wunschantriebsmoments entsprechend der dritten Einkupplungsdauer schneller aufgehoben wird.

9. Verfahren nach einem der vorangehenden Ansprüche,
**dadurch gekennzeichnet,**
**dass** bei einer ein betätigtes Bremspedal (7) anzeigenden Bedieninformation, insbesondere auch während eines bereits laufenden Schließvorgangs, die Kupplung (11) ab dem Beginn der Bremspedalbetätigung oder bei nach Beendigung des Bremseingriffs oder, falls eine Stillstandszeit vorliegt, nach Ablauf der Stillstandszeit bereits betätigtem Bremspedal (7) mit Beendigung des Bremseingriffs oder Ablauf der Stillstandszeit für eine Wartezeitdauer, insbesondere 1 bis 3 Sekunden, die Kupplung (11) geöffnet gehalten wird, bevor sie mit einer vierten Einkupplungsdauer, die insbesondere der ersten Einkupplungsdauer entspricht, geschlossen wird.

10. Verfahren nach einem der vorangehenden Ansprüche,
**dadurch gekennzeichnet,**
**dass** ein laufender Öffnungsvorgang und/oder Schließvorgang der Kupplung (11) bei einem eine Betätigung des Kupplungspedals (5) anzeigenden Signal abgebrochen wird.

11. Verfahren nach einem der vorangehenden Ansprüche,
**dadurch gekennzeichnet,**
**dass** bei einem Öffnungsvorgang und/oder einer automatisch durch den Kupplungsaktuator (14) geöffneten Kupplung (11) und/oder einem Schließvorgang über ein akustisches oder optisches Ausgabemittel (20) eine Fahrerübernahmeaufforderung ausgegeben wird.

12. Verfahren nach einem der vorangehenden Ansprüche,
**dadurch gekennzeichnet,**
**dass** bei einem Fehlerzustand des Kraftfahrzeugs (1) eine durch den Kupplungsaktuator (14) geöffnete Kupplung (11) automatisch geschlossen wird.

13. Kraftfahrzeug, umfassend ein Kupplungspedal (5) als Stellmittel zum manuellen Betätigen einer Kupplung (11), einen als zusätzliches Stellmittel (13) für die Kupplung (11) vorgesehenen Kupplungsaktuator (14) zum automatischen Öffnen und Schließen der Kupplung (11) und ein Sicherheitssystem (15) zur Kollisionsvermeidung und/oder Kollisionsschwereminderung mit einem zur Durchführung eines Verfahrens nach einem der vorangehenden Ansprüche ausgebildeten Steuergerät (16).

## Claims

1. Method for operating a safety system (15) for avoiding a collision and/or reducing the severity of a collision in a vehicle (1), which comprises a coupling pedal (5) as actuating means for the manual actuation of a coupling (11), wherein the safety system (15) is designed to execute at least one brake intervention if there is a threat of a collision,
**characterised in that**
a coupling actuator (14) provided as additional actuating means (13) is used for the automatic opening and closing of the coupling (11), wherein in the context of at least one brake intervention by the safety system (15) a triggering of the coupling actuator (14) for the opening of the coupling (11) takes place depending on at least one intervention information relating to the brake intervention, wherein by taking into account at least one operating information an automatic closing procedure of the coupling (11) by the coupling actuator (14) takes place after the automatic opening of the coupling (11) by means of the coupling actuator (14) on account of a brake intervention, wherein the closing procedure in a brake intervention that does not bring the vehicle (1) to a standstill takes place immediately after the brake intervention and in a brake intervention that brings the vehicle to a standstill begins after a predetermined standstill time, wherein if the operating information indicates that the driver is not operating either a brake pedal (7) or an accelerator pedal (6), the coupling (11) is automatically closed again after a first coupling duration.

2. Method according to claim 1,
**characterised in that**
a stalling information indicating an imminent stalling of an engine (2) of the vehicle (1) during or immediately after executing the brake intervention is used as intervention information, wherein in the event of an imminent stalling the coupling (11) is automatically opened by the coupling actuator (14).

3. Method according to claim 2,
**characterised in that**
the opening of the coupling (11) takes place only if an additional condition exists, in particular an activity information indicating the execution of a brake intervention as intervention information and/or if the engine speed (2) fails to reach a threshold value.

4. Method according to claim 2 or 3,
**characterised in that**
in order to determine the stalling information on the basis of environmental data of the vehicle (1) and ego data of the vehicle (1) the intervention intensity and/or intervention duration of the brake intervention is predicted and from this the stalling information is derived by determining a final engine speed, at which braking takes place, and comparing it with a critical speed limit.

5. Method according to any one of the preceding claims,
**characterised in that**
0.8 to 1.2 sec. is used as predetermined standstill time.

6. Method according to any one of the preceding claims,
**characterised in that**
in the case of an operating information indicating an actuated accelerator pedal (6), in particular also during an already ongoing closing procedure, the closing procedure is realised as a start-up procedure by a closing of the coupling (11) during a second coupling duration, which corresponds in particular to the first coupling duration.

7. Method according to claim 6,
wherein a desired torque requested by the actuation of the accelerator pedal (6) is restricted and/or reduced depending on at least one restriction criterion.

8. Method according to claim 7,
**characterised in that**
an actuation signal describing the type of actuation of the accelerator pedal (6) is detected, wherein in the case of an actuation signal indicating an overriding behaviour of the driver the closing procedure is completed in a third coupling duration that is shorter than the second coupling duration, and the restriction and/or reduction of the desired torque is lifted more quickly corresponding to the third coupling duration.

9. Method according to any one of the preceding claims, **characterised in that** in the case of an operating information indicating an actuated brake pedal (7), in particular also during an already ongoing closing procedure, the coupling (11) is kept open from the beginning of the brake pedal actuation or in the case of a brake pedal (7) already actuated after completion of the brake intervention or, if there is a standstill time, after expiry of the standstill time with completion of the brake intervention or expiry of the standstill time of the coupling (11) for a waiting time duration of in particular 1 to 3 sec., before it is closed with a fourth coupling duration, which corresponds in particular to the first coupling duration.

10. Method according to any one of the preceding claims,
**characterised in that**
an ongoing opening procedure and/or closing procedure of the coupling (11) is discontinued in the event of a signal indicating an actuation of the coupling pedal (5).

11. Method according to any one of the preceding claims,
**characterised in that**
in the case of an opening procedure and/or a coupling (11) automatically opened by the coupling actuator (14) and/or a closing procedure a request for the driver to take over is issued via an acoustic or optical output means (20).

12. Method according to any one of the preceding claims,
**characterised in that**
in the event of a fault state of the vehicle (1) a coupling (11) opened by the coupling actuator (14) is automatically closed.

13. Vehicle comprising a coupling pedal (5) as actuating means for the manual actuation of a coupling (11), a coupling actuator (14) provided as additional actuating means (13) for the coupling (11) for the automatic opening and closing of the coupling (11), and a safety system (15) for avoiding a collision and/or reducing the severity of a collision, with a control unit (16) designed to carry out a method according to any one of the preceding claims.

## Revendications

1. Procédé servant à faire fonctionner un système de sécurité (15) servant à éviter des collisions et/ou à réduire la gravité de collisions dans un véhicule automobile (1), lequel système de sécurité présente une pédale d'embrayage (5) en tant que moyen de réglage servant à actionner manuellement un embrayage (11), dans lequel le système de sécurité (15) est réalisé afin de mettre en oeuvre au moins une intervention de freinage dans le cas d'une collision imminente,
**caractérisé en ce**
**qu'**un actionneur d'embrayage (14) prévu en tant que moyen de réglage (13) supplémentaire est utilisé afin d'ouvrir et de fermer de manière automatique l'embrayage (11), dans lequel un pilotage de l'actionneur d'embrayage (14) servant à ouvrir l'embrayage (11) en fonction d'au moins une information d'intervention concernant l'intervention de freinage est effectué dans le cadre d'au moins une intervention de freinage du système de sécurité (15), dans lequel une opération de fermeture automatique de l'embrayage (11) par l'actionneur d'embrayage (14) est effectuée, en tenant compte d'au moins une information d'utilisation, après l'ouverture automatique de l'embrayage (11) au moyen de l'actionneur d'embrayage (14) suite à une intervention de freinage, dans lequel l'opération de fermeture est effectuée, dans le cas d'une intervention de freinage ne donnant pas lieu à l'arrêt du véhicule automobile (1), immédiatement après l'intervention de freinage et débute, dans le cas d'une intervention de freinage donnant lieu à l'arrêt, après une durée d'arrêt prédéfinie, dans lequel, si l'information d'utilisation indique que le conducteur n'utilise ni une pédale de freinage (7) ni une pédale d'accélérateur (6), l'embrayage (11) est automatiquement refermé sur une première durée de désembrayage.

2. Procédé selon la revendication 1,
**caractérisé en ce**
**qu'**est utilisée en tant qu'information d'intervention une information de calage indiquant un calage imminent d'un moteur (2) du véhicule automobile (1) pendant ou immédiatement après la mise en oeuvre de l'intervention de freinage, dans lequel l'embrayage (11) est automatiquement ouvert par l'actionneur d'embrayage (14) dans le cas d'un calage imminent.

3. Procédé selon la revendication 2,
**caractérisé en ce**
**que** l'ouverture de l'embrayage (11) est effectuée seulement en présence d'une condition supplémentaire, en particulier d'une information d'activité indiquant la mise en oeuvre d'une intervention de freinage en tant qu'information d'intervention et/ou dans le cas du dépassement d'une valeur de seuil pour la vitesse de rotation du moteur (2).

4. Procédé selon la revendication 2 ou 3,
**caractérisé en ce**
**qu'**afin de déterminer l'information de calage sur la base de données environnantes du véhicule automobile (1) et de données propres au véhicule automobile (1), l'intensité d'intervention et/ou la durée d'intervention de l'intervention de freinage sont prédites et l'information de calage en est déduite en déterminant une vitesse de rotation finale, sur laquelle le ralentissement est adapté, et en comparant avec une vitesse de rotation limite critique.

5. Procédé selon l'une quelconque des revendications précédentes,
**caractérisé en ce**
**que** 0,8 à 1,2 s est utilisée en tant que temps d'arrêt prédéfini.

6. Procédé selon l'une quelconque des revendications précédentes,
**caractérisé en ce**
**que** dans le cas d'une information d'utilisation indiquant une pédale d'accélérateur (6) actionnée, en particulier également pendant une opération de fermeture déjà en cours, l'opération de fermeture est réalisée en tant qu'une opération de démarrage par une fermeture de l'embrayage (11) pendant une deuxième durée de désembrayage, qui correspond en particulier à la première durée de désembrayage.

7. Procédé selon la revendication 6,
dans lequel un couple d'entraînement souhaité demandé par l'actionnement de la pédale d'accélérateur (6) est limité et/ou réduit en fonction d'au moins un critère de restriction.

8. Procédé selon la revendication 7,
**caractérisé en ce**
**qu'**un signal d'actionnement décrivant le type d'actionnement de la pédale d'accélérateur (6) est déterminé, dans lequel dans le cas d'un signal d'actionnement indiquant un comportement de surcommande du conducteur, l'opération de fermeture est finalisée lors d'une troisième durée de désembrayage, qui est plus courte que la deuxième durée de désembrayage, et la limitation et/ou la réduction du couple d'entraînement souhaité sont annulées plus rapidement conformément à la troisième durée de désembrayage.

9. Procédé selon l'une quelconque des revendications précédentes,
**caractérisé en ce**
**que** dans le cas d'une information d'utilisation indiquant une pédale de freinage (7) actionnée, en particulier également pendant une opération de fermeture déjà en cours, l'embrayage (11) l'embrayage (11) est maintenu ouvert dès le début de l'actionnement de pédale de freinage ou lorsque la pédale de freinage (7) est déjà actionnée après la fin de l'intervention de freinage ou, en présence d'un temps d'arrêt, à l'issue du temps d'arrêt impliquant la fin de l'intervention de freinage ou l'issue du temps d'arrêt pour une durée de maintenance, en particulier de 1 à 3 secondes, avant qu'il ne soit fermé avec une quatrième durée de désembrayage, qui correspond en particulier à la première durée de désembrayage.

10. Procédé selon l'une quelconque des revendications précédentes,
**caractérisé en ce**
**qu'**une opération d'ouverture et/ou une opération de fermeture en cours de l'embrayage (11) sont interrompues dans le cas d'un signal indiquant un actionnement de la pédale d'embrayage (5).

11. Procédé selon l'une quelconque des revendications précédentes,
**caractérisé en ce**
**qu'**une demande de prise de contrôle par le conducteur est émise dans le cas d'une opération d'ouverture et/ou d'un embrayage (11) automatiquement ouvert par l'actionneur d'embrayage (14) et/ou d'une opération de fermeture par l'intermédiaire d'un moyen d'émission (20) acoustique ou optique.

12. Procédé selon l'une quelconque des revendications précédentes,
**caractérisé en ce**
**qu'**un embrayage (11) ouvert par l'actionneur d'embrayage (14) est automatiquement fermé dans le cas d'un état défectueux du véhicule automobile (1).

13. Véhicule automobile, comprenant une pédale d'embrayage (5) en tant que moyen de réglage servant à actionner manuellement un embrayage (11), un actionneur d'embrayage (14) prévu en tant que moyen de réglage (13) supplémentaire pour l'embrayage (11) servant à l'ouverture et à la fermeture automatique de l'embrayage (11) et un système de sécurité (15) servant à éviter des collisions et/ou à réduire la gravité de collisions, avec un appareil de commande (16) réalisé pour la mise en oeuvre du procédé selon l'une quelconque des revendications précédentes.
